Europäisches Patentamt

European Patent Office

Office européen des brevets

(11) Veröffentlichungsnummer: **0 288 900**

**A2**

(12) # EUROPÄISCHE PATENTANMELDUNG

(21) Anmeldenummer: 88106366.3

(22) Anmeldetag: 21.04.88

(51) Int. Cl.⁴: **G11B 17/028** , **G11B 23/00**

(30) Priorität: 29.04.87 DE 3714251

(43) Veröffentlichungstag der Anmeldung:
02.11.88 Patentblatt 88/44

(84) Benannte Vertragsstaaten:
**AT BE CH DE ES FR GB GR IT LI LU NL SE**

(71) Anmelder: **Deutsche Thomson-Brandt GmbH**
**Postfach 1307**
**D-7730 Villingen-Schwenningen(DE)**

(72) Erfinder: **Geiger, Erich, Dipl.-Ing.**
**Panoramaweg 19**
**D-7734 Unterkirnach(DE)**
Erfinder: **Hermann, Hans**
**Ginsterweg 36**
**D-7742 St. Georgen(DE)**
Erfinder: **Scheffler, Wilfried**
**Auf Schalmen 23**
**D-7710 Donaueschingen(DE)**

(74) Vertreter: **Einsel, Robert, Dipl.-Ing.**
**Deutsche Thomson-Brandt GmbH Patent-**
**und Lizenzabteilung Göttinger Chaussee 76**
**D-3000 Hannover 91(DE)**

(54) **CD-Halterungsvorrichtung sowie Adapter für CDs.**

(57) 1.1 CD-Halterungsvorrichtung sowie Adapter

2.1 bisherige CD-Halterungsvorrichtungen in CD-Spielern oder CD-Cartridges sind auf ein bestimmtes CD-Format angepaßt. Sollen CD's kleineren CD-Formats abgespielt werden, so besteht die Gefahr eines Verrutschens der CD, wodurch ein Eingreifen der Zentriermittel und der Zentrierung verhindert wird.

2.2 Die Erfindung schafft Abhilfe, indem eine Einlegescheibe in das CD-Fach des CD-Spielers oder der CD-Cartridge eingelegt wird, deren Außendurchmesser dem Hüllkreisdurchmesser der Halterungsvorrichtung entspricht. Der Innendurchmesser ist an den Außendurchmesser der CD kleineren CD-Formats angepaßt, so daß die CD in die Einlegescheibe hineingelegt werden kann.

2.3 Die CD-Haltevorrichtung ist zum universellen Abspielen von CD's verschiedener CD-Formate auf ein und demselben CD-Spieler anwendbar.

## CD-Halterungsvorrichtung sowie Adapter für CDs

Die Erfindung betrifft eine CD-Halterungsvorrichtung für einen CD-Spieler oder eine CD-Cartridge nach dem Oberbegriff des Anspruchs 1.

CDs werden zum Abspielen in das CD-Fach eines CD-Spielers entweder direkt oder zusammen mit einer CD-Cartridge eingesetzt und in eine Rotationsbewegung versetzt. Zu diesem Zweck muß die CD zentriert auf einen Plattenteller gedrückt werden, was durch eine Vorzentrierung erleichtert wird. Die Vorzentrierung erfolgt in dem CD-Fach des CD-Spielers oder der CD-Cartridge durch Begrenzungsflächen. Diese Begrenzungsflächen befinden sich auf einem Hüllkreis, dessen Hüllkreisdurchmesser einem mittleren oder maximalen üblichen CD-Format so angepaßt ist, daß eine CD dieses Formats unter einem gewissen Radialspiel noch fein zentrierbar und frei drehbar ist.

Nachdem CDs erhältlich sind, die ein kleineres Format aufweisen, besteht das Problem, diese beim Einlegen in das CD-Fach wie CDs größeren Formats vorzuzentrieren. Dies kann durch die vorhandenen Begrenzungsflächen nicht erzielt werden, da bei Anlage an eine dieser Flächen die CD vollkommen exzentrisch liegt. Die Feinzentriermittel des CD-Spielers sind dann nicht in der Lage, diesen extremen Versatz auszugleichen.

Der Erfindung liegt die Aufgabe zugrunde, eine CD-Halterungsvorrichtung so zu verbessern, daß auch CDs kleineren CD-Formats sicher zentriert und abgespielt werden können.

Diese Aufgabe wird bei einer CD-Halterungsvorrichtung nach dem Oberbegriff des Anspruchs 1 durch die im Kennzeichen genannten Merkmale gelöst.

Durch die Erfindung wird mittels der Einlegescheibe ein CD-Format nachgebildet, das gerade in das CD-Fach der Halterungsvorrichtung hineinpaßt. Die Einlegescheibe ist so gegen radiales Verschieben gesichert. Wird in die mittlere Aussparung der Einlegescheibe nun eine CD kleineren CD-Formats eingelegt, so ist diese über die Einlegescheibe ebenfalls gegen radiales Verschieben gesichert. Der Innendurchmesser der Einlegescheibe ist an den Außendurchmesser kleinerer CD-Formate so angepaßt, daß noch ein gewisses radiales Spiel verbleibt, welche die Feinzentrierung und freie Rotation der CD erlaubt.

Die Erfindung betrifft ferner einen Adapter für CDs unterschiedlicher CD-Formate nach dem Oberbegriff des Anspruchs 2.

Diesbezüglich liegt ihr die Aufgabe zugrunde, einen Adapter zu schaffen, der ein sicheres Zentrieren und Abspielen von CDs kleinerer CD-Formate in CD-Spielern direkt oder zusammen mit CD-Cartridges ermöglicht, die ursprünglich nur zur Aufnahme von CDs eines größeren Formats ausgebildet sind.

Diese Aufgabe wird bei einem Adapter nach dem Oberbegriff des Anspruchs 2 durch die im kennzeichnenden Teil angegebenen Merkmale gelöst.

Die CDs kleineren CD-Formats werden durch die kreisringförmige Einlegescheibe zu einer Anordnung ergänzt, die den gleichen Durchmesser wie CDs eines mittleren oder eines maximalen üblichen CD-Formats besitzen. Auf diese Weise können die CDs kleineren Formats problemlos in CD-Spielern, ggf. unter Benutzung von CD-Cartridges abgespielt werden, wie CDS, für die das CD-Fach des CD-Spielers bzw. der CD-Cartridge ausgelegt ist. Die Handhabung der Einlegescheibe und der CDs ist außerordentlich einfach und im eingelegten Zustand sind die CDs bei Verlagerungen des CD-Spielers oder beim Transport der CD-Cartridge gegen Beschädigungen durch Rutschen geschützt.

Weiterbildungen und vorteilhafte Ausführungsformen der CD-Halterungsvorrichtung sowie des Adapters ergeben sich aus den Ansprüchen 3 bis 9, der weiteren Beschreibung sowie der Zeichnung, die ein Ausführungsbeispiel der Erfindung veranschaulicht.

Es zeigen:

Fig. 1 einen Teil einer CD-Cartridge mit einer Einlegescheibe und einer CD kleinen CD-Formats,

Fig. 2 eine Draufsicht auf eine Einlegescheibe und

Fig. 3 eine halbseitig geschnittene Seitenansicht einer Einlegescheibe.

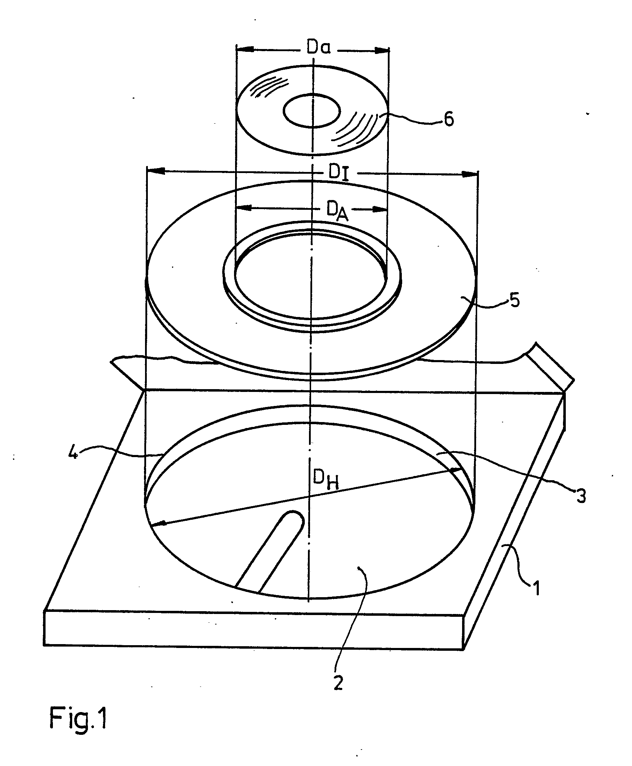

In Fig. 1 ist nach Art einer Explosionszeichnung eine CD-Cartridge 1 mit einer darüberliegenden kreisringförmigen Einlegescheibe 5 sowie einer CD 6 dargestellt. Die Cartridge 1 dient zum Schutz der CD bei der Aufbewahrung und Handhabung und erleichtert das "blinde" Einführen in einen CD-Spieler, insbesondere in Kraftfahrzeugen. Die CD-Cartridge 1 besitzt ein CD-Fach 2, in das CDs eingelegt werden können. Das CD-Fach 2 ist von Begrenzungsflächen 3 umgeben, die auf einem Hüllkreis 4 angeordnet sind. Die Begrenzungsflächen 3 können einmal in Form einer Zylindermantelfläche oder auch als diskrete Flächenelemente ausgebildet sein. Der Hüllkreisdurchmesser $D_H$ ist dem mittleren oder maximalen üblichen CD-Format angepaßt. Dieses beträgt z.Zt. 4 3/4″ entsprechend 120,0 mm. Der Hüllkreisdurchmesser $D_H$ ist etwas größer, damit für die CDs noch ein gewisses Spiel für eine Feinzentrierung mit dem Plattenteller und eine freie Drehbarkeit verbleibt.

Normalerweise kann in das CD-Fach 2 eine CD entsprechenden Formats eingelegt und diese dann abgespielt werden. Um auch CDs kleineren CD-Formats abspielen zu können, dient die Einlegescheibe 5, die in das CD-Fach 2 eingelegt werden kann. Die Einlegescheibe 5 kann aufgrund ihrer kreisringförmigen Ausgestaltung eine CD 6 kleineren Formats aufnehmen. Der Innendurchmesser $D_I$ ist an den Außendurchmesser $D_a$ der CD 6 kleineren Formats so angepaßt, daß die CD 6 zunächst vorzentriert ist und anschließend durch Zentriermittel des CD-Spielers feinzentriert werden kann und innerhalb der Einlegescheibe 5 rotieren kann.

Die nähere Ausgestaltung der Einlegescheibe 5 ergibt sich aus den Fig. 2 und 3. Zur Festlegung der Einlegescheibe 5 im CD-Fach 2 dient ein axialer Abstandshalter 7. Dessen Erhebungen 8 über den Oberflächen 9 der Einlegescheibe 5 weisen eine solche Höhe auf, daß die Einlegescheibe 5 im Betriebszustand durch eine obere und untere Anlagefläche der CD-Halterungsvorrichtung oder der CD-Cartridge 1 spielfrei festgelegt wird. Dabei kann die untere Anlagefläche zum Beispiel durch ein Stützlager und die obere Anlagefläche durch einen Deckel gebildet sein. Der Abstandshalter wird in seinen Abmessungen zweckmäßig eng toleriert ausgeführt, damit eine in der CD-Halterungsvorrichtung oder der CD-Cadridge 1 vorhandene Verschlußblende nicht durch Verwindung in ihrer Bewegung gehindert ist. Der Abstandshalter 7 ist als umlaufender oder wenigstens dreifach segmentierter Steg am inneren Rand der Einlegescheibe 5 ausgebildet und bietet so eine sichere, wakkelfreie Auflage im CD-Fach 2. Gleichzeitig verhindert der Steg auch dann ein Verrutschen der CD 6 bei axialer Verlagerung, wenn diese unter die Oberfläche 9 der Einlegescheibe 5 taucht.

Vorzugsweise besteht die Einlegescheibe 5 aus durchsichtigem Material, damit der optische Aufnehmer beim Absuchen eines abtastbaren Bereichs von außen nach innen durch keine Reflexionen gestört wird und so bis zur aktiven Oberfläche der CD kleineren CD-Formats vordringen kann.

Bei einer konkreten Ausgestaltung weist die Einlegescheibe 5 einen Außendurchmesser $D_A$ von 121,6 mm und einen Innendurchmesser $D_I$ von 77,2 mm auf. Die Dicke $D_1$ beträgt 1,5 mm und der Abstandshalter 7 weist eine Gesamtdicke $D_2$ von 3,7 mm und eine Auflagebreite B von 1,5 mm auf. Mit diesen Abmessungen ist es möglich, eine CD des 3″-Formats in einer CD-Cartridge bzw. einem CD-Plattenspieler für 4 1/2″-formatige CDs abspielen zu können.

## Ansprüche

1. CD-Halterungsvorrichtung für einen CD-Spieler oder eine CD-Cartridge (1), bestehend aus auf einem Hüllkreis (4) angeordneten, ein CD-Fach (2) umgebenden Begrenzungsflächen (3), wobei der Hüllkreisdurchmesser ($D_H$) einem mittleren oder maximalen üblichen CD-Format, vorzugsweise 4 3/4″, aus einer Menge unterschiedlicher üblicher CD-Formate angepaßt ist, dadurch gekennzeichnet, daß eine kreisringförmige Einlegescheibe (5) vorgesehen ist, deren Außendurchmesser ($D_A$) dem Hüllkreisdurchmesser ($D_H$) der Halterungsvorrichtung entspricht und deren Innendurchmesser ($D_I$) an den Außendurchmesser ($D_a$) kleinerer CD-Formate angepaßt ist und die zur Sicherung von CDs (6) kleinerer CD-Formate gegen radiale Verschiebung in das CD-Fach (2) einbringbar ist.

2. Adapter für CDs unterschiedlicher CD-Formate, gekennzeichnet durch eine ringförmige Einlegescheibe (5), deren Außendurchmesser ($D_A$) einem mittleren oder maximalen üblichen CD-Format, vorzugsweise 4 3/4″, aus einer Menge üblicher CD-Formate entspricht und deren Innendurchmesser ($D_I$) an den Außendurchmesser ($D_a$) kleinerer CD-Formate angepaßt ist und die zur Sicherung von CDs (6) kleinerer CD-Formate gegen radiale Verschiebung in das CD-Fach (2) eines CD-Spielers oder einer CD-Cartridge (1) einlegbar ist.

3. CD-Halterungsvorrichtung nach Anspruch 1 oder Adapter nach Anspruch 2, dadurch gekennzeichnet, daß die Einlegescheibe (5) einen axialen Abstandshalter (7) umfaßt, der im Betriebszustand an eine obere und untere Anlagefläche der CD-Halterungsvorrichtung oder der CD-Cartridge (1) spielfrei festlegbar ist.

4. CD-Halterungsvorrichtung oder Adapter nach Anspruch 3, dadurch gekennzeichnet, daß der Abstandshalter (7) zu wenigstens einer der beiden Seiten der Oberfläche (9) der Einlegescheibe (5) vorsteht.

5. CD-Halterungsvorrichtung oder Adapter nach Anspruch 3 oder 4, dadurch gekennzeichnet, daß der Abstandshalter (7) als umlaufender oder wenigstens dreifach segmentierter Steg ausgebildet ist.

6. CD-Halterungsvorrichtung oder Adapter nach einem oder mehreren der Ansprüche 3 bis 5, dadurch gekennzeichnet, daß der Abstandshalter (7) am inneren Rand der Einlegescheibe (5) angeordnet ist.

7. CD-Halterungsvorrichtung nach einem oder mehreren der Ansprüche 1 oder 3 bis 6 oder Adapter nach einem oder mehreren der Ansprüche 2 bis 6, dadurch gekennzeichnet, daß die Einlegescheibe (5) aus durchsichtigem Material besteht.

8. CD-Halterungsvorrichtung nach einem oder mehreren der Ansprüche 1 oder 3 bis 7 oder Adapter nach einem oder mehreren der Ansprüche 2 bis 7, dadurch gekennzeichnet, daß die Einlegescheibe (5) einen Außendurchmesser ($D_A$) von 121,6 mm und einen Innendurchmesser ($D_I$) von 77,2 mm aufweist.

9. CD-Halterungsvorrichtung nach einem oder mehreren der Ansprüche 1 oder 3 bis 8 oder Adapter nach einem oder mehreren der Ansprüche 2 bis 8, dadurch gekennzeichnet, daß die Einlegescheibe (5) eine Dicke ($d_1$) von 1,5 mm und der Abstandshalter (7) eine Gesamtdicke ($d_2$) von 3,7 mm und eine Auflagebreite (b) von 1,5 mm aufweist.

Fig.1